# EUROPEAN PATENT SPECIFICATION

(11) **EP 0 749 871 B1**
(45) Date of publication and mention of the grant of the patent: **24.10.2001**
(21) Application number: 96109666.6
(22) Date of filing: 17.06.1996
(51) Int. Cl.: B60Q 1/26

(54) **A device for fixing a rear lamp unit to a motor vehicle, in particular a motor car**
Vorrichtung zur Befestigung einer Rückleuchteneinheit für Kraftfahrzeuge
Dispositif de fixation d'un bloc de feux arrières pour véhicule automobile

(30) Priority: 22.06.1995 IT TO950520
(43) Date of publication of application: 27.12.1996
(73) Proprietor: FIAT AUTO S.p.A., 10135 Torino (IT)
(72) Inventor: Di Giusto, Nevio, 10124 Torino (IT)
(74) Representative: Serra, Francesco

(56) References cited:
- DE-A- 2 001 708

## Description

The present invention concerns a device for fixing a rear lamp unit to a motor vehicle, particularly a motor car, of the kind defined in the preamble of claims 1 and 2.

A device of this kind is known from DE-A-20 01 708. In this prior device the means for centring and locking the lamp unit in a corresponding opening of a motor vehicle body panel comprise a plurality of resilient peripheral members integral with the lamp housing body, which are provided with respective stepped surfaces adapted to interferingly engage with the edge of said opening. A circumferential lip of the lamp housing body is adapted to be brought in abutment against the outer surface of the panel around said opening.

The object of the present invention is to provide an improved device for fixing a rear lamp unit to a motor vehicle, particularly a motor car, which is of simple construction and is inexpensive.

The present invention achieves the aforesaid objects by virtue of a device for fixing a rear lamp unit to a motor vehicle, particularly a motor car, having the characteristics specifically referred to in the following claims.

Further characteristics and advantages of the present invention will become clear in the course of the following detailed description, given purely by way of non-limitative example, with reference to the accompanying drawings, in which:
Figure 1 is a partially sectioned perspective view of a rear lamp unit provided with a first embodiment of the fixing device according to the invention, mounted on the external wall of a motor vehicle body;
Figure 2 is a plan view of a part of the lamp unit of Figure 1;
Figure 3 is a partially sectioned perspective view of a part of the lamp unit of Figure 1, before it is fitted to the body;
Figure 4 is a partially sectioned perspective view of a part of a rear lamp unit provided with a second embodiment of the fixing device according to the invention, before it is fitted to the motor vehicle body; and
Figure 5 is a detail of Figure 4 in the process of being fitted to the motor vehicle body.

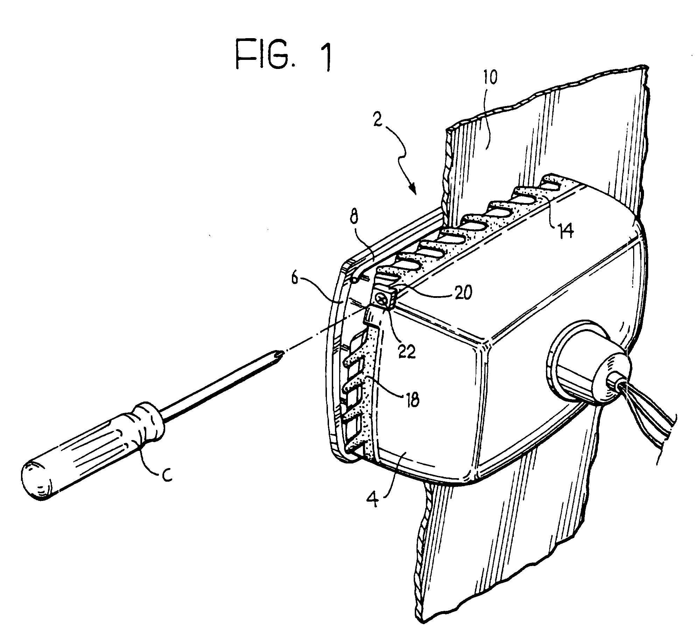

With reference to Figures 1 to 3, the reference numeral 2 indicates in its entirety a first embodiment of a lamp unit provided with the device for centring and fixing it to the vehicle body.

The lamp unit 2 includes a lamp body 4, a transparent member 6 and a gasket 8. The lamp body 4 is positioned in an opening in the metal panel 10; the outer edge of the lamp body 4 facing the panel 10 is provided with adjacent projections 12 which define therebetween parallel passages inclined with respect to the plane of the panel 10.

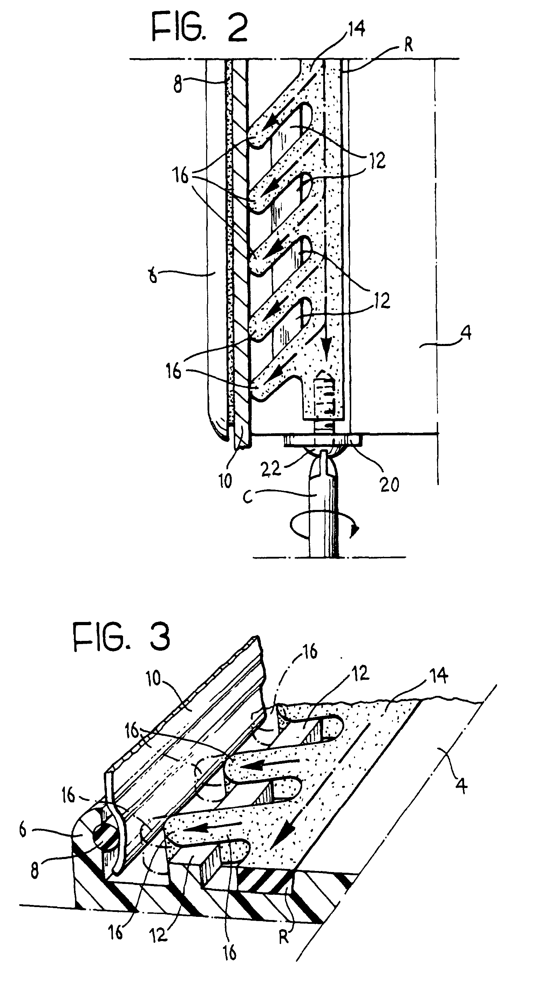

A strip 14 of plastically deformable material on the peripheral edge of the lamp body 4 facing the panel 10 is inserted in a channel R formed in the peripheral edge of the lamp body 4 (Figure 3) and includes inclined lettral teeth or fingers 16, each tooth being interposed in the passage defined between two adjacent projections 12.

The strip 14 is permanently fixed at one end 18 to the lamp body 4, and is attached at its other end 20 to a threaded sleeve (not shown) attached to the lamp body 4 and engageable by a screw 22.

When the lamp body 4 is mounted on the panel but not yet fixed thereto, the strip 14 and the associated fingers 16 are in the condition indicated in solid outline in Figure 3. Tightening the screw 22 with a screwdriver C pulls the strip 14, causing it to also transversely more within the channel R so that the teeth or fingers 16 move in said passages towards the metal panel 10 and gradually assume the configuration indicated in broken outline in Figure 3 and then the configuration shown in Figure 2, in which the teeth 16 "pull" the lamp unit 2 against the panel 10, moving the transparent member 6 towards the outer surface of the panel, pressing the gasket 8 between the transparent member 6 and the outer surface of the panel 10.

In this way the lamp unit 2, is securely fixed to the motor vehicle body, without needing projections in the back of the vehicle body.

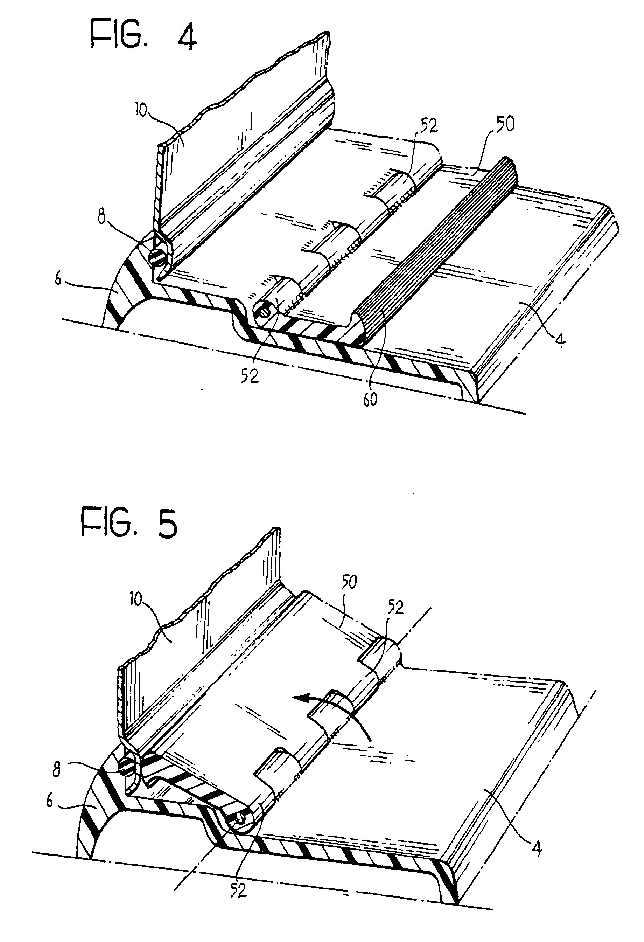

A second embodiment of the device according to the invention is illustrated in Figures 4 and 5, in which equivalent or similar details to those previously described are indicated with the same reference numerals.

In these figures, pivotable elements indicated 50 are disposed along the periphery of the lamp body 4 and are pivoted thereto by hinges 52 having an axis of rotation substantially parallel to the panel to which the lamp body 4 is to be fixed. The end part of each of the pivotable elements 50 is shaped as a hook provided with knurling 60.

The lamp body 4 is fitted to the panel 10 as follows. After having positioned the lamp body 4, the pivotable elements 50 are pivoted about the hinges 52 to bring their curved ends into contact with the panel 10, and the lamp unit 2 is locked by force against the panel 10, this also being by virtue of the "gripping" effect of the knurling 60.

In this way, the transparent member 6 is "pulled" against the outer surface of the panel 10, thereby causing the deformation of the gasket 8.

Naturally, the principle of the invention remaining the same, the embodiments and constructional details may be widely varied with respect to that described and illustrated, without departing from the ambit of the present invention.

In particular, the strip 14 which is formed as a single piece in the embodiments illustrated, may instead be formed as two or more pieces, each being anchored to the lamp body 4 and provided with a tensioning screw 22.

## Claims

1. A device for fixing a rear lamp unit (2) to a motor vehicle, particularly a motor car, in an opening formed in a motor vehicle body panel (10), the said lamp unit (2) including a lamp body (4) intended in use to be positioned inside the said opening and a transparent member (6) intended to be positioned outside the opening, the said opening having a section slightly greater than that of an intermediate portion of the lamp unit (2); the device including means disposed on the outer periphery of the said lamp body (4), on the side facing the metal panel (10), for centring and locking the lamp unit (2) against the outer edges of said opening of the metal panel (10);
**characterised in that** it further includes a gasket (8) intended to be disposed between the edge of the said transparent member (6) and the edge of the opening in the metal panel (10) facing the transparent member (6); the said opening having a section substantially smaller than that of the said transparent member (6); the said means for centring and locking the lamp unit (2) against the edges of said opening of the metal panel (10) including a plurality of projections (12) on the outer peripheral part of the lamp body (4) which, in use, face the inner surface of the edges of said opening of the metal panel (10) and which define therebetween parallel passages inclined with respect to said panel (10), and a strip (14) disposed on the periphery of the lamp body (4) also facing the inner surface of the edges of said opening of the metal panel (10) and inserted in a channel (R) formed in the periphery of the lamp body (4), the said strip (14) having inclined lateral teeth (16) extending each in one of said passages between two adjacent projections (12); the arrangement being such that when said strip (14) is pulled the teeth (16) thereof move in said passage towards the metal panel (10) pressing the said lamp unit (2) against the edges of said opening of the metal panel (10) .

2. A device for fixing a rear lamp unit (2) to a motor vehicle, particularly a motor car, in an opening formed in a motor vehicle body panel (10), the said lamp unit (2) including a lamp body (4) intended in use to be positioned inside the said opening and a transparent member (6) intended to be positioned outside the opening, the said opening having a section slightly greater than that of an intermediate portion of the lamp unit (2); the device including means disposed on the outer periphery of the said lamp body (4), on the side facing the metal panel (10), for centring and locking the lamp unit (2) against the outer edges of said opening of the metal panel (10);
**characterised in that** it further includes a gasket (8) intended to be disposed between the edge of the said transparent member (6) and the edge of the opening in the metal panel (10) facing the transparent member (6); the said opening having a section substantially smaller than that of the said transparent member (6); the said means for centring and locking the lamp unit (2) against the edges of the said opening of the metal panel (10) including hinge elements (50) on the said lamp body (4) which upon rotation interferingly engage with the inner face of the edges of said opening of the metal panel (10).

## Patentansprüche

1. Vorrichtung zum Befestigen einer Rückleuchteneinheit (2) an ein Kraftfahrzeug, insbesondere einen Kraftwagen, in einer in einer Kraftfahrzeugkarosserie-Wand (10) gebildeten Öffnung, wobei die Leuchteneinheit (2) einen Leuchtenhauptteil (4) einschließt, der bei Verwendung dazu bestimmt ist, innerhalb der Öffnung positioniert zu werden, und ein durchsichtiges Bauglied (6) einschließt, das dazu bestimmt ist, außerhalb der Öffnung positioniert zu werden, wobei die Öffnung einen Querschnitt aufweist, der etwas größer als der eines Zwischenteils der Leuchteneinheit (2) ist, und wobei die Vorrichtung Mittel, die an der äußeren Peripherie des Leuchtenhauptteils (4) angeordnet sind, und zwar an der der Metallwand (10) zugewandten Seite, zum Zentrieren und Fixieren der Leuchteneinheit (2) gegen die äußeren Kanten der Öffnung der Metallwand (10) einschließt,
**dadurch gekennzeichnet, dass** sie ferner eine Dichtung (8) einschließt, die dazu bestimmt ist, zwischen der Kante des durchsichtigen Bauglieds (6) und der Kante der Öffnung in der dem durchsichtigen Bauglied (6) zugewandten Metallwand (10) angeordnet zu werden, wobei die Öffnung einen Querschnitt aufweist, der substanziell kleiner als der des durchsichtigen Bauglieds (6) ist, wobei die Mittel zum Zentrieren und Fixieren der Leuchteneinheit (2) gegen die Kanten der Öffnung der Metallwand (10) eine Mehrzahl an Fortsätzen (12) am äußeren peripheren Teil des Leuchtenhauptteils (4), die im Einsatz der Innenfläche der Kanten der Öffnung der Metallwand (10) zugewandt sind und die dazwischen parallele, zur Wand (10) geneigte Durchgänge definieren, sowie einen Streifen (14) einschließen, der an der Peripherie des Leuchtenhauptteils (4) angeordnet ist, welcher Streifen ebenfalls der Innenfläche der Kanten der Öffnung der Metallwand (10) zugewandt ist, und der eingesetzt ist in einem Kanal (R), der in der Peripherie des Leuchtenhauptteils (4) gebildet ist, wobei der Streifen (14) geneigte seitliche Zähne (16) aufweist, die sich jeweils in einen der Durchgänge zwischen zwei benachbarten Fortsätzen (12) erstrecken, und wobei die Anordnung so ist, dass bei einem Ziehen des Streifens (14) sich dessen Zähne (16) die Leuchteneinheit (2) gegen die Kanten der Öffnung der Metallwand (10) pressend im Durchgang hin zur Metallwand (10) bewegen.

2. Vorrichtung zum Befestigen einer Rückleuchteneinheit (2) an ein Kraftfahrzeug, insbesondere einen Kraftwagen, in einer in einer Kraftfahrzeugkarosserie-Wand (10) gebildeten Öffnung, wobei die Leuchteneinheit (2) einen Leuchtenhauptteil (4) einschließt, der bei Verwendung dazu bestimmt ist, innerhalb der Öffnung positioniert zu werden, und ein durchsichtiges Bauglied (6) einschließt, das dazu bestimmt ist, außerhalb der Öffnung positioniert zu werden, wobei die Öffnung einen Querschnitt aufweist, der etwas größer als der eines Zwischenteils der Leuchteneinheit (2) ist, und wobei die Vorrichtung Mittel, die an der äußeren Peripherie des Leuchtenhauptteils (4) angeordnet sind, und zwar an der der Metallwand (10) zugewandten Seite, zum Zentrieren und Fixieren der Leuchteneinheit (2) gegen die äußeren Kanten der Öffnung der Metallwand (10) einschließt,
**dadurch gekennzeichnet, dass** sie ferner eine Dichtung (8) einschließt, die dazu bestimmt ist, zwischen der Kante des durchsichtigen Bauglieds (6) und der Kante der Öffnung in der dem durchsichtigen Bauglied (6) zugewandten Metallwand (10) angeordnet zu werden, wobei die Öffnung einen Querschnitt aufweist, der substanziell kleiner als der des durchsichtigen Bauglieds (6) ist, und wobei die Mittel zum Zentrieren und Fixieren der Leuchteneinheit (2) gegen die Kanten der Öffnung der Metallwand (10) Gelenkelemente (50) am Leuchtenhauptteil (4) einschließen, die auf eine Rotation hin interferierend mit der Innenseite der Kanten der Öffnung der Metallwand (10) in Eingriff kommen.

## Revendications

1. Dispositif pour la fixation d'une unité de feu arrière (2) sur un véhicule à moteur, en particulier une automobile, dans une ouverture formée dans un panneau de carrosserie de véhicule à moteur (10), ladite unité de feu (2) comprenant un corps de feu (4) prévu en utilisation pour être positionné à l'intérieur de ladite ouverture et un élément transparent (6) prévu pour être positionné à l'extérieur de l'ouverture, ladite ouverture ayant une section légèrement plus grande que celle d'une partie intermédiaire de l'unité de feu (2), le dispositif comprenant des moyens disposés sur la périphérie extérieure dudit corps de feu (4), sur le côté face au panneau métallique (10), afin de centrer et bloquer l'unité de feu (2) contre les bords extérieurs de ladite ouverture du panneau métallique (10);
**caractérisé en ce qu'**il comporte en outre un joint d'étanchéité (8) prévu pour être disposé entre le bord dudit élément transparent (6) et le bord de l'ouverture dans le panneau métallique (10) face à l'élément transparent (6); ladite ouverture ayant une section sensiblement plus petite que celle dudit élément transparent (6); lesdits moyens pour le centrage et le blocage de l'unité de feu (2) contre les bords de ladite ouverture du panneau métallique (10) comprenant plusieurs saillies (12) sur la partie périphérique extérieure du corps de feu (4) qui, lors de l'utilisation, font face à la surface interne des bords de ladite ouverture du panneau métallique (10) et qui définissent entre elles des passages parallèles inclinés par rapport au dit panneau (10), et une bande (14) disposée sur la périphérie du corps de feu (4) également face à la surface interne des bords de ladite ouverture du panneau métallique (10) et insérée dans un canal (R) formé dans la périphérie du corps de feu (4), ladite bande (14) ayant des dents latérales inclinées (16) qui s'étendent chacune dans un desdits passages entre deux saillies (12) adjacentes; l'agencement étant tel que, lorsque ladite bande (14) est tirée, les dents (16) de celle-ci se déplacent dans ledit passage vers le panneau métallique (10) en poussant ladite unité de feu (2) contre les bords de ladite ouverture du panneau métallique (10).

2. Dispositif pour la fixation d'une unité de feu arrière (2) sur un véhicule à moteur, en particulier une automobile, dans une ouverture formée dans un panneau de carrosserie de véhicule à moteur (10), ladite unité de feu (2) comprenant un corps de feu (4) prévu en utilisation pour être positionné à l'intérieur de ladite ouverture et un élément transparent (6) prévu pour être positionné à l'extérieur de l'ouverture, ladite ouverture ayant une section légèrement plus grande que celle d'une partie intermédiaire de l'unité de feu (2), le dispositif comprenant des moyens disposés sur la périphérie extérieure dudit corps de feu (4), sur le côté face au panneau métallique (10), afin de centrer et bloquer l'unité de feu arrière (2) contre les bords extérieurs de ladite ouverture du panneau métallique (10);
**caractérisé en ce qu'**il comporte en outre un joint d'étanchéité (8) prévu pour être disposé entre le bord dudit élément transparent (6) et le bord de l'ouverture dans le panneau métallique (10) face à l'élément transparent (6); ladite ouverture ayant une section sensiblement plus petite que celle dudit élément transparent (6); lesdits moyens pour le centrage et le blocage de l'unité de feu (2) contre les bords de ladite ouverture du panneau métallique (10) comprenant des éléments de charnière (50) sur ledit corps de feu (4) qui, lors de la rotation, engagent avec interférence la face interne des bords de ladite ouverture du panneau métallique (10).
